# EUROPEAN PATENT APPLICATION

(11) **EP 4 640 405 A1**
(43) Date of publication of application: **29.10.2025**
(21) Application number: 22969212.4
(22) Date of filing: 22.12.2022
(51) Int. Cl.: B29C 49/04

(54) **METHOD FOR MANUFACTURING CONTAINER, APPARATUS FOR MANUFACTURING CONTAINER, AND CONTAINER**

(71) Applicant: Giver Life Co., Ltd., Kadoma-shi, Osaka 571-0041 (JP)
(72) Inventor: Hirai, Toshitaka, Kadoma-shi Osaka 571-0041 (JP)
(74) Representative: Stöckeler, Ferdinand
(86) International application number: PCT/JP2022/047336
(87) International publication number: WO 2024/134826

(57) **Abstract**

A container having unevenness on an inner surface is manufactured.

A container manufacturing method including step A of forming a tube-shaped parison, step B of sandwiching the parison with a mold, and step C of expanding the parison from an inner side to form a container, in which in the step A, when a resin forming the parison is extruded from a die, a core or the die moves up and down to continuously extrude parisons having different thicknesses, and unevenness is formed on an inner surface of the formed container.

## Description

### Technical Field

The present invention relates to a container including portions having different thicknesses, and a manufacturing method and a manufacturing apparatus of the same.

### Background Art

A conventional direct blow molding apparatus includes a parison forming die (hereinafter simply referred to as a "die") that extrudes a thermoplastic resin in a molten state into a tube shape to form a parison, a core disposed at the center of a discharge opening portion of the thermoplastic resin of the die, and a container mold that sandwiches the parison in a state where one end portion of the formed parison is sealed and expands it from the inner side to form a container shape.

Furthermore, in the conventional direct blow molding apparatus, the core can be adjusted up and down to change the thickness of the parison so that containers having different thicknesses can be molded (see Patent Literature 1). Furthermore, in the direct blow molding apparatus of Patent Literature 1, the core can be inclined, and the thickness of the container in the peripheral direction can be adjusted.

In addition, an invention in which a groove is formed in a core in order to form a rib (convex portion) on an inner surface of a container is disclosed (see Patent Literature 2). The groove of the core extends along an axial direction of the core and this groove forms a linear rib along the height direction on the inner surface of the parison extruded from the die. Then, the parison is put into the container mold described above, and the parison is expanded into the shape of the container, whereby the container having the linear rib along the height direction on the inner surface is formed.

### Citation List

### Patent Literature

Patent Literature 1: JP 2011-228734 A
Patent Literature 1: JP 1-18846 B

### Summary of Invention

### Technical Problem

However, in the conventional direct blow molding apparatus, a uniform thickness of the container can be adjusted and a linear rib along the height direction can be formed on the inner surface of the container, but a container having unevenness continuing in the height direction on the inner surface of the container cannot be manufactured, and such an idea has not even been conceived. In addition, there was no container having unevenness continuing in the height direction on the inner surface of the container.

Furthermore, when unevenness is formed on the outer surface side of the container, it can be easily formed by forming a container mold for sandwiching the parison into a shape having unevenness, but a container having unevenness on the inner surface side or a container having different thickness cannot be formed.

The inventor of the present invention has conducted intensive studies to form unevenness on the inner surface of the container, and completed the present invention through trial and error. The present invention has been made in view of such a point, and one of the objects of the present invention is to provide a manufacturing method and a manufacturing apparatus of a container having unevenness on an inner surface side.

### Solution to Problem

A container manufacturing method according to one aspect of the present invention is a container manufacturing method including step A of forming a tube-shaped parison, step B of sandwiching the parison with a mold, and step C of expanding the parison from an inner side to form a container, in which in the step A, when a resin forming the parison is extruded from a die, a core or the die moves up and down to continuously extrude parisons having different thicknesses, and unevenness is formed on an inner surface of the formed container.

According to this configuration, as the core or the die continuously moves up and down, a clearance between the core and the die changes, and the amount of resin extruded therefrom changes. As a result, the thickness of the extruded parison differs in the height direction, and by expanding the parison from the inner side by air or the like in a state where the parison is sandwiched by the mold, it becomes possible to form unevenness on the inner surface of the container. The unevenness formed by this manufacturing method are unevenness that are formed in the height direction and in which a concave portion and a convex portion are smoothly continued.

Furthermore, in the container manufacturing method, the step A includes moving the core or the die up and down at a predetermined interval and with a predetermined amplitude. According to this configuration, containers having a predetermined thickness can be manufactured at predetermined intervals.

Furthermore, in the container manufacturing method, the step A may include moving the core or the die up and down so that continuous unevenness is formed over an entire length in the height direction of the inner surface of the container. According to this configuration, it is possible to provide a container in which continuous unevenness is formed over the entire length in the height direction of the inner surface of the container.

Furthermore, in the container manufacturing method, the step A may include moving the core or the die up and down so that continuous unevenness is formed over one part in a height direction of the inner surface of the container, and moving neither the core nor the die up and down so that unevenness is not formed at other parts. According to this configuration, a container in which the continuous unevenness is formed at one part in the height direction of the inner surface of the container and the other part has a uniform thickness can be obtained.

Furthermore, in the container manufacturing method, the formed container can be formed to have different thicknesses in the height direction. According to this configuration, a container in which portions having different thicknesses of a peripheral wall are present in the height direction of the container can be obtained.

**In** addition, the container manufacturing method may be such that the step A includes clamping a lower end of the parison extruded from the die and hanging down, and twisting the parison in a peripheral direction while clamping the lower end of the parison. According to this configuration, a container having unevenness formed on the inner surface of the container and having a spiral-shaped pattern may be obtained.

Furthermore, in the container manufacturing method, the step A includes forming a tube-shaped parison having a projection on an inner surface. According to this configuration, a container having unevenness formed on the inner surface of the container and having a linear projection in the height direction can be obtained.

Furthermore, according to the container manufacturing method, in the step A, the core is disposed so as to be at a position eccentric from a center position of a central hole provided in the die, the parison is extruded so that a thickness of the parison extruded from the die has a peripheral wall of one part formed to be thinner than a peripheral wall of the other part, and the formed container is formed to have different thicknesses in a peripheral direction.

According to this configuration, by disposing the core at a position eccentric from the center position of the central hole of the die, the clearance between the core and the die changes on the left and right, and the amount of resin extruded therefrom changes. As a result, the thickness of the extruded parison differs in the peripheral direction, and by expanding the parison from the inner side by air or the like in a state where the parison is sandwiched by the mold, it becomes possible to form a container in which the thickness differs in the peripheral direction of the container.

A container manufacturing apparatus according to one aspect of the present invention is a container manufacturing apparatus including a means A configured to form a tube-shaped parison, a means B configured to sandwich the parison with a mold, and a means C configured to expand the parison from an inner side to form a container; wherein the means A is a means that, when a resin forming the parison is extruded from a die, moves a core or the die up and down to continuously extrude parisons having different thicknesses, and unevenness is formed on an inner surface of the formed container. According to this configuration, a container in which unevenness is formed on the inner surface can be manufactured by using this manufacturing apparatus.

Furthermore, the container manufacturing apparatus may be configured such that the means A may include a means for moving the core or the die up and down at a predetermined interval and with a predetermined amplitude.

Furthermore, the container manufacturing apparatus may be configured such that the means A includes a means configured to move the core or the die up and down so that unevenness is formed over an entire length in the height direction of the inner surface of the container.

Furthermore, the container manufacturing apparatus may be configured such that the means A includes a means configured to move the core or the die up and down so that unevenness is formed over one part in a height direction of the inner surface of the container, and move neither the core nor the die up and down so that unevenness is not formed at other parts.

**In** addition, the container manufacturing apparatus can be configured such that the formed container is formed to have different thicknesses in the height direction.

Furthermore, in the container manufacturing apparatus may be configured such that the means A includes a means configured to clamp lower end of the parison extruded from the die and hanging down, and twist the parison in a peripheral direction while clamping the lower end of the parison.

Furthermore, the container manufacturing apparatus may be configured such that the means A includes a means configured to form a tube shape parison having a projection on an inner surface.

Furthermore, the container manufacturing apparatus may be configured such that in the means A, the core is disposed so as to be at a position eccentric from a center position of a central hole provided in the die, and a means configured to extrude the parison so that a thickness of the parison extruded from the die has a peripheral wall of one part formed to be thinner than a peripheral wall of the other part is provided, and the formed container is formed to have different thicknesses in a peripheral direction.

A container according to one aspect of the present invention has an outer surface formed flat, and continuous unevenness formed in a height direction of an inner surface. According to this configuration, a container in which the outer surface is flat and the continuous unevenness is formed in the height direction of the inner surface, which could not be manufactured conventionally, can be formed.

Furthermore, the container is formed with unevenness, the continuous unevenness being formed over the entire length in the height direction of the inner surface.

Furthermore, in this container, the unevenness is formed such that the unevenness is formed over one part in the height direction of the inner surface and the unevenness is not formed on the other part.

Furthermore, the container is formed with different thicknesses in a height direction.

Moreover, the container is formed with a projection over the height direction on the inner surface.

In addition, in the container, the projection is formed in a spiral shape.

Furthermore, the container is formed with different thicknesses in a peripheral direction.

### Advantageous Effects of Invention

The present invention can provide a container having unevenness on the inner surface side.

### Description of Embodiments

### <Container manufacturing apparatus>

Hereinafter, an embodiment according to the present invention will be described with reference to the drawings, but the present invention is not limited to the following embodiment. FIG. 1 is a schematic view of a container manufacturing apparatus showing manufacturing steps of a container according to a first embodiment of the present invention. FIG. 2 is a cross-sectional view of a parison forming machine of the container manufacturing apparatus. FIG. 3 is a cross-sectional view of a main part of the parison forming machine. FIG. 4 is a cross-sectional view taken along line X-X. FIG. 5 is an explanatory view for explaining the movement of the core of the parison forming machine. FIG. 6 is a control diagram for controlling the core.

### (1. Overall configuration)

First, a container manufacturing apparatus will be described, and a container manufacturing method and a container will be described in this order.

This manufacturing apparatus is a manufacturing apparatus 1 (hereinafter referred to as a "direct blow molding apparatus 1") capable of easily manufacturing a container having unevenness on an inner surface by direct blow molding.

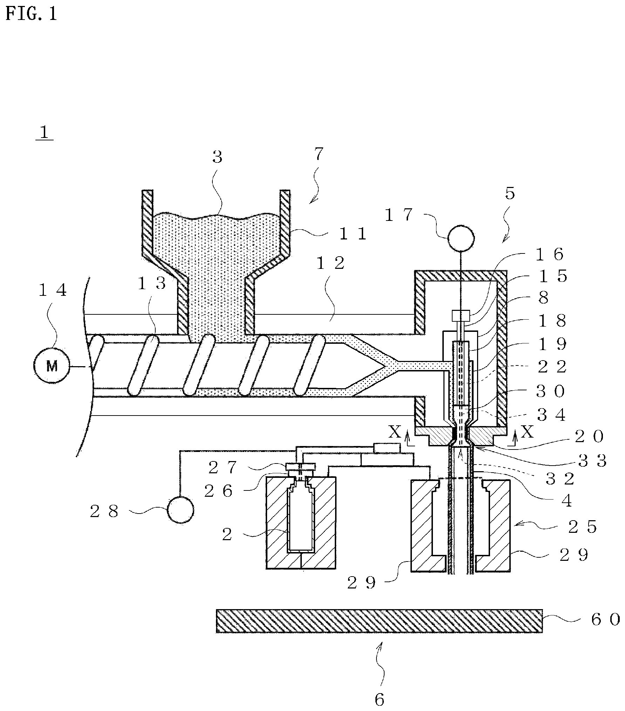

As illustrated in FIG. 1, the direct blow molding apparatus 1 includes a parison forming machine 5 configured to form a tube-shaped parison 4 and a container forming machine 6 configured to expand the parison 4 into a container shape to obtain a container 2. Then, molten resin 3 extrudes the parison 4 by the parison forming machine 5, and the parison 4 is expanded from the inside by air in a state where the parison 4 is sandwiched by the container forming machine 6 to form a container. Note that in the direct blow molding apparatus 1, the container forming machine 6 is configured to be freely movable with respect to the parison forming machine 5.

### (2. Parison forming machine)

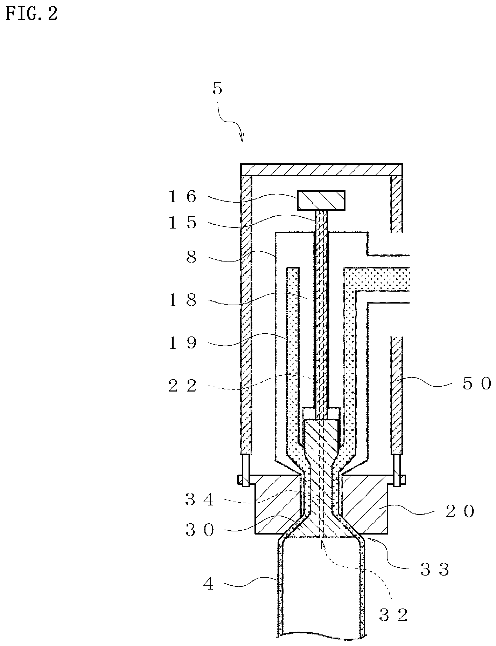

As illustrated in FIGS. 1 and 2, the parison forming machine 5 heats the thermoplastic resin 3 and extrudes the resin 3 heated to a molten state into a tube shape, thereby forming the parison 4. As an example of the present embodiment, PET is used for the resin 3, but other thermoplastic resins can also be used.

The parison forming machine 5 includes a die head main body 8 for extruding a thermoplastic resin in a molten state into a tube shape to form the parison 4, and a resin material supply unit 7 configured to supply the molten resin to the die head main body 8.

The resin material supply unit 7 includes a resin material introducing port 11 having a funnel shape, a heating cylinder 12 having a cylindrical shape installed at a lower part of the resin material introducing port 11 and configured to heat the resin material, an extrusion screw 13 configured to extrude the resin material inside the heating cylinder 12, and an electric motor 14 configured to drive the extrusion screw 13.

The extrusion screw 13 is installed inside the heating cylinder 12 coaxially with the heating cylinder 12 and has a circular column shape, and has a helical teeth on the outer periphery. The extrusion screw 13 is driven by the electric motor 14 to rotate. As a result, the resin in the heating cylinder 12 is extruded to the die head main body 8.

### (3. Die head)

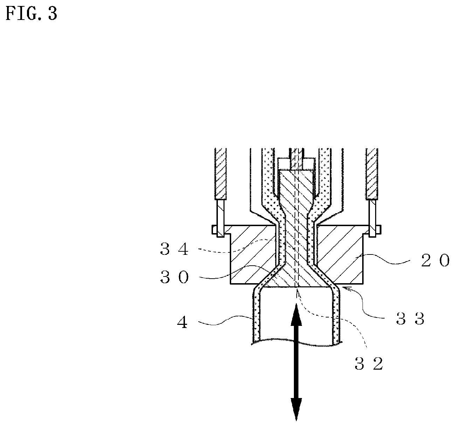

As illustrated in FIGS. 2 and 3, in the die head main body 8, a mandrel 18 to be a shaft mold when extruding a thermoplastic resin in a molten state into a tube shape is fitted in a nest form, and an annular passage 19 is formed between an inner peripheral surface of the die head main body 8 and an outer peripheral surface of the mandrel 18.

In addition, an annular die 20 is disposed at an end portion of the die head main body 8, and a core 30 which is inserted into the die head main body 8 and whose distal end is flush with or projects out from the die 20 is disposed.

An axis center of the die head main body 8 and an axis center of the core 30 are provided on the same line. The core 30 is coupled to one end portion of a core shaft 15 through which the mandrel 18 is inserted, and the other end portion of the core shaft 15 is coupled to an end portion on a side opposite to the opening portion of the die head main body 8 and is connected to the servomotor 16, so that the core 30 is configured to be movable up and down.

Furthermore, the servomotor 16 is connected to a control unit (not illustrated), and is controlled such that the core 30 can move up and down by controlling the servomotor 16.

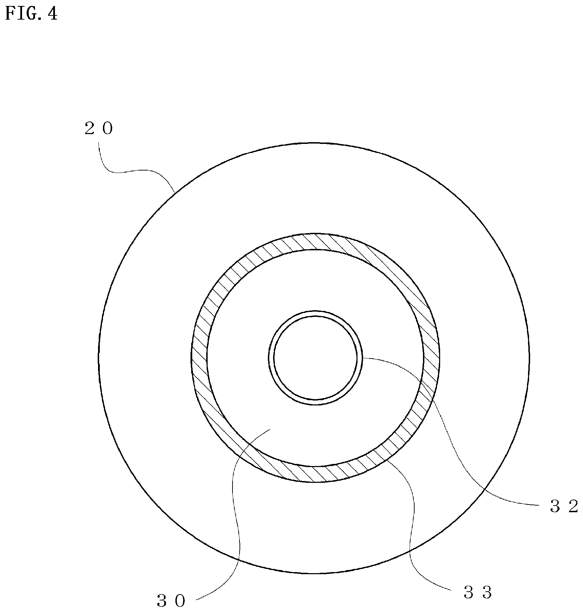

As illustrated in FIGS. 3 and 4, a ventilation path 34 extending in the axial direction from a ventilation port 32 is formed at the center of the core 30. The ventilation path 34 will be described later.

Furthermore, an annular resin path leading to the annular passage 19 is formed between the inner peripheral surface of the die head main body 8 and the outer peripheral surface of the core 30.

The die 20 is disposed at an end portion of the die head main body 8, and an annular resin path is formed between an inner peripheral surface of the die 20 and the outer peripheral surface of the core 30. In the opening portion of the die 20, an annular parison discharge nozzle opening 33 is formed by the die 20 and the core 30 (see FIG. 4). As a result, the resin introduced from an extruder passes through the resin passage, and the parison 4 is discharged from the nozzle opening 33.

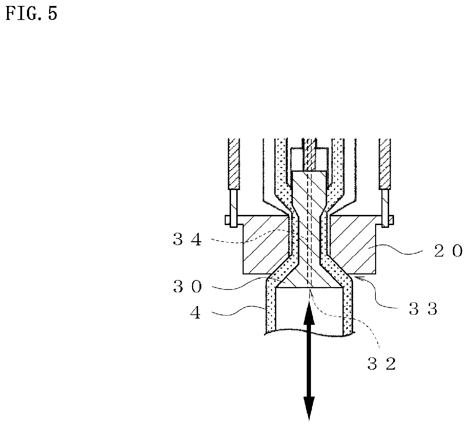

Note that in the present embodiment, the die 20 has a tapered surface on the inner peripheral surface in the vicinity of the opening portion. Then, by moving the core 30 in an up-down direction of the die head main body 8, a gap between the die 20 and the core 30 is changed, and the amount of resin to be extruded and the thickness of the parison are changed (see FIG. 5).

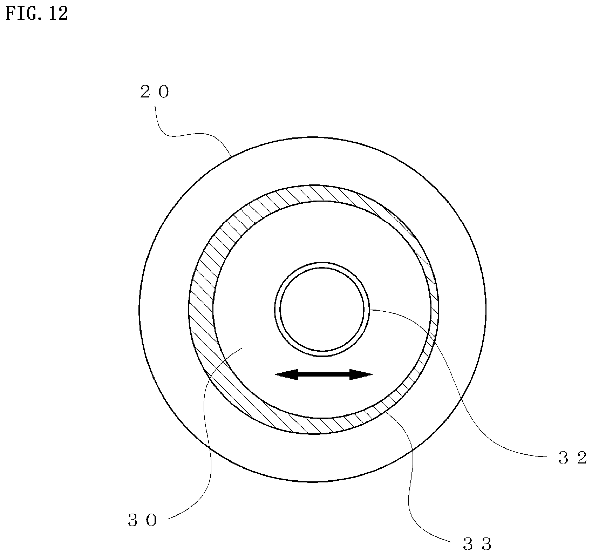

Note that although the shape of the core 30 is such that the bottom surface is a circular shape in the present embodiment, this is not the sole case, and the shape may be a gear shape, a star shape, or the like. Furthermore, the die 20 may be configured to be movable not only in the up-down direction but also in a horizontal direction. **In** this way, the gap between the hole in the lower surface of the die 20 and the bottom surface of the core 30 can be adjusted, and the thickness of the parison can be adjusted in the peripheral direction. Thus, containers having different thicknesses in the peripheral direction can be manufactured (see FIG. 12).

Furthermore, the parison forming machine 5 includes a ventilation path 22, which will be described later, formed in the mandrel 18 and a gas supply source 17 configured to supply pressurized cooling gas to the ventilation path 22.

The gas supply source 17 supplies pressurized cooling gas serving as a gas flow to the ventilation path 22 of the mandrel 18. The ventilation path 22 leads to the inner side of the parison 4. The pressurized cooling gas is, for example, air at normal temperature having a predetermined pressure.

Accordingly, the pressurized cooling gas is blown into the parison 4 from the ventilation port 32 through the ventilation path 22. As a result, the parison 4 formed by the die head main body 8 can be maintained in a tube shape.

### (4. Container forming machine)

Next, the container forming machine 6 configured to form the parison 4 having a tube shape into a container shape will be described. As illustrated in FIG. 1, the container forming machine 6 includes a base 60, two container molds 25 installed on the base 60, a driving device 27 having a blow pin 26 corresponding to a diameter of a mouth portion of the container 2 to be formed, and a moving mechanism (not illustrated) that moves the container mold 25 and the driving device 27 together with the base 60. The container mold 25 sandwiches the parison 4, blows out air or the like from the inside of the parison 4 to expand the parison 4, and forms it to a container shape.

Specifically, a part of the parison 4 is accommodated in the container mold 25, and the parison 4 accommodated in the container mold 25 is cooled by injecting high-pressure air from the blow pin 26 to expand the parison 4 from the inner side into a container shape, thereby obtaining the container 2.

Note that the blow pin 26 may be disposed so as to be inserted through the centers of the core 30 and the mandrel 18, in which case, the blow pin may be configured to be movable up and down, and may be configured to be inserted from above the parison 4 sandwiched by the container mold to blow out the pressurized cooling gas. In addition, it is also possible to have a configuration in which the pressurized cooling gas is blown out from above the parison 4 from the ventilation path 22 through the ventilation port 32 of the core 30 without using the blow pin.

In the container mold 25, the inner surface of a concave portion serving as a portion forming the container 2 is formed into the shape of the outer surface of the container 2. In addition, the container mold 25 is configured by a pair of separation molds 29 relatively movable in the lateral direction. Note that the separation mold 29 of the present embodiment is configured as a pair of right and left, but may be, for example, three or four configurations.

After the container mold 25 is moved to the lower side of the die head main body 8, when the parison 4 is disposed between the pair of separation molds 29, the pair of separation molds 29 separated from each other approaches each other, and the separation surfaces come into contact with each other. **In** the container mold 25 in this state, the parison 4 is expanded to be formed to a container shape.

**In** addition, the container forming machine 6 includes a ventilation path formed in the blow pin 26 and a second gas supply source 28 configured to supply pressurized cooling gas to the ventilation path.

The second gas supply source 28 supplies air at room temperature having a predetermined pressure serving as pressurized cooling gas to the ventilation path of the blow pin 26. This ventilation path can communicate with the inner side of the parison 4 in the container mold 25. Accordingly, the pressurized cooling gas is blown out into the parison 4 through the ventilation path at a required timing.

When the formation of the container 2 by the container mold 25 ends, the moving mechanism of the container forming machine 6 retracts the container mold 25 from the lower side of the die head main body 8 and moves the next container mold 25 to the lower side of the die head main body 8. With this configuration, the container 2 can be continuously formed.

### <Container manufacturing method>

### (1. Overall)

Next, a container manufacturing method (hereinafter, referred to as a direct blow molding method) will be described. The direct blow molding method of the present embodiment mainly includes: (1) a parison forming step of extruding the thermoplastic resin 3 in a molten state into a tube shape to form the parison 4; and (2) a container forming step of sandwiching the formed parison 4 with the container mold 25 and blowing pressurized cooling gas into the parison 4 in the container mold 25 to cool the parison 4 while expanding the parison 4 into a container shape to obtain the container 2.

### (2. Parison forming step)

As illustrated in FIG. 1, in the parison forming step, the resin 3 in a solid state is introduced into the heating cylinder 12 from the resin material introducing port 11. The resin 3 introduced into the heating cylinder 12 receives heat of the heating cylinder 12, and gradually melts. At the same time, the molten resin 3 is conveyed from the heating cylinder 12 to the die head main body 8 by the extrusion force of the extrusion screw 13 driven by an electric motor 14.

The resin 3 in the molten state that has reached the die head main body 8 passes through the annular passage 19 and is pushed out downward of the die head main body 8. Thus, the tube shape parison 4 is formed.

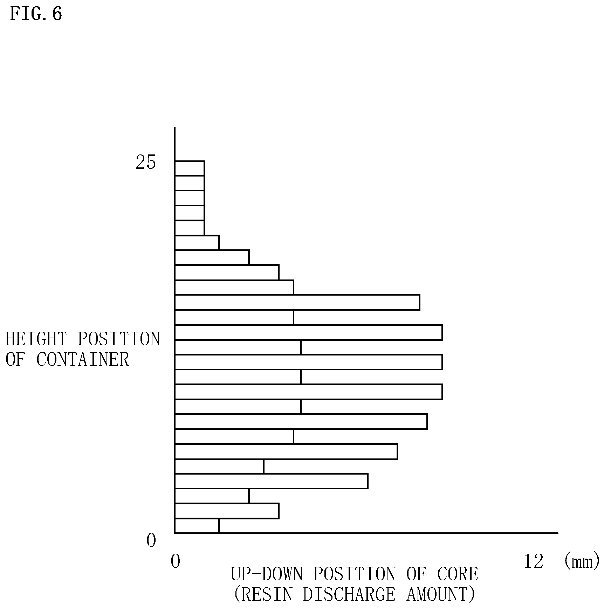

At this time, the core 30 reciprocates up and down by the control of the servomotor 16, so that the gap between the die 20 and the core 30 changes as needed and the amount of resin to be extruded changes. As a result, the parison 4 in a state in which the thickness is thick and the thickness is thin are alternately formed in the height direction is extruded (see FIGS. 5 and 6).

Furthermore, when the parison 4 is formed, the pressurized cooling gas is blown out from the ventilation path 22 through the ventilation port 32. The pressurized cooling gas is weakly pressurized (e.g., 0.5 to 1.0 kg/cm²) and has a lower pressure than the pressurized cooling gas blown from the inner side of the parison 4 in a state of being sandwiched with the container molds 25. This is for preventing the shape of the cylindrical parison 4 from substantially changing when the pressurized cooling gas in the ventilation path 22 is blown out toward a cavity on the inner side of the cylindrical parison 4 in a softened state.

### (3. Container forming step)

Next, as illustrated in FIG. 1, a pair of separation molds 29 is positioned on the outer side of the parison 4 in an open state. At this time, the parison 4 is in a state hanging down from the die. Thereafter, the pair of separation molds 29 sandwiches the parison 4, whereby the lower side of the parison 4 is sealed. Note that the lower end portion of the parison 4 is cut.

Next, the upper end portion of the parison 4 whose lower end portion is sealed is cut by a hot cutter (not illustrated).

Furthermore, the pressurized cooling gas from the ventilation path 22 is blown out from the time point of a start of the formation of the parison 4 until a predetermined portion of the parison 4 is cut. Note that the pressurized cooling gas may be blown out at a required timing.

Next, the blow pin 26 is inserted into an opening of the upper end portion of the cut parison 4. Thereafter, pressurized air of about 0.39 to 0.49 MPa is blown into the parison 4 whose bottom portion is closed from a blowout port of the ventilation path of the blow pin 26. This causes the parison 4 in a semi-solid state to expand at high temperature. As a result, the parison 4 expands while the thickness is being thinned, and the parison 4 is formed to lie along the inner surface of the container mold 25.

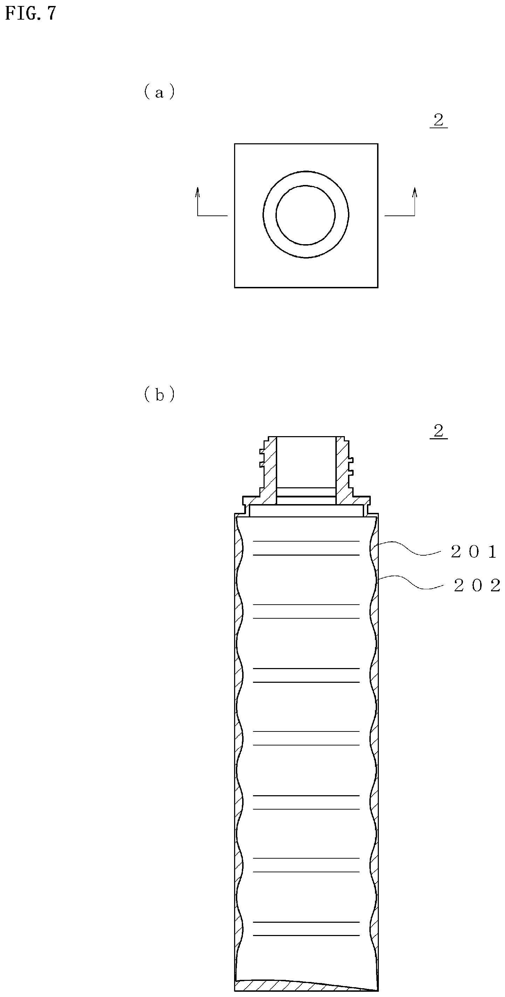

At this time, the thick thickness portion and the thin thickness portion are alternately continued in the height direction, and thus when the parison 4 expands, the outer side has a shape conforming to the container mold while the thick thickness portion has a shape as if bulged out to the inner side. As a result, a container having a shape in which a bulged convex portion 201 and a non-bulged concave portion 202 are alternately and smoothly continued on the inner side is formed in a semi-solid state by the thick thickness portion and the thin thickness portion (see FIG. 7).

Next, the container 2 is solidified by cooling the container mold 25. Then, the pair of separation molds 29 is separated from each other, the container 2 is removed from the pair of separation molds 29, and the container 2 illustrated in FIG. 7 is completed.

Note that the pressurized cooling gas passing through the ventilation path 22 and the ventilation path 34 is not limited to air, and may be a gas that does not react with the resin 3 forming the parison 4, for example, an inert gas.

### <Container>

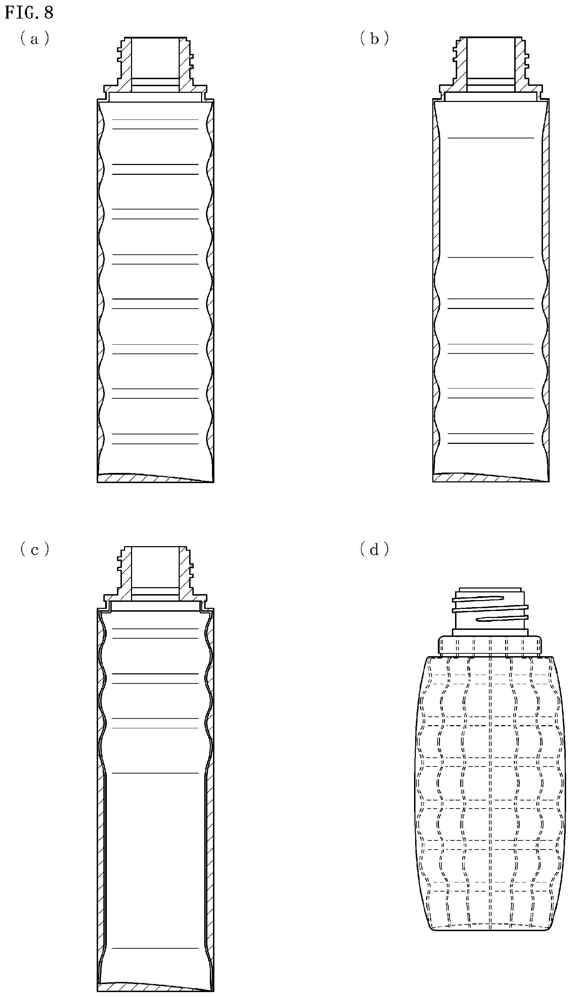

FIG. 8 is a longitudinal sectional view of the container of the present embodiment. The container 2 has a bottomed rectangular cylindrical shape, and has a mouth portion formed at a top portion and a male screw formed on an outer peripheral surface of the mouth portion. **In** addition, the container 2 has the inner side formed with the bulged convex portion 201 and the non-bulged concave portion 202 continuing in the height direction, and the outer side formed with a flat surface without unevenness thus having a simple outer shape.

Since the surface on the outer side of the container 2 configured as described above is a flat surface without unevenness, it is easy to attach a label and to stack the containers 2. **In** addition, since the container 2 is transparent or translucent, and the bulged convex portion and the non-bulged concave portion are continued in the height direction on the inner side, the container 2 is very clean and excellent in appearance due to reflection, refraction, and the like of light when viewed from the outside. Furthermore, since the liquid contained therein can be visually recognized from the outside, it is suitable as a container for storing cosmetics, pharmaceuticals, and the like.

In addition, the bulged amount of the convex portion bulged out to the inner side and the span of the convex portion can be changed by controlling the up-down movement of the core 30 described above (see FIG. 6). For example, FIG. 8(a) illustrates a container in which the span of the convex portion is made longer than that of the container 2. Furthermore, as illustrated in FIGS. 8(b) and 8(c), it is also possible to provide a container in which continuous convex portions are formed only in one part, other than the container 2 in which continuous convex portions appear in the entire height direction. In addition, as illustrated in FIG. 8(d), by changing the container mold 25, it is also possible to have a cylindrical shape, a spherical shape, a rounded shape in which an intermediate portion in a height direction is expanded, or the like other than a square cylindrical shape.

### <Other Embodiments>

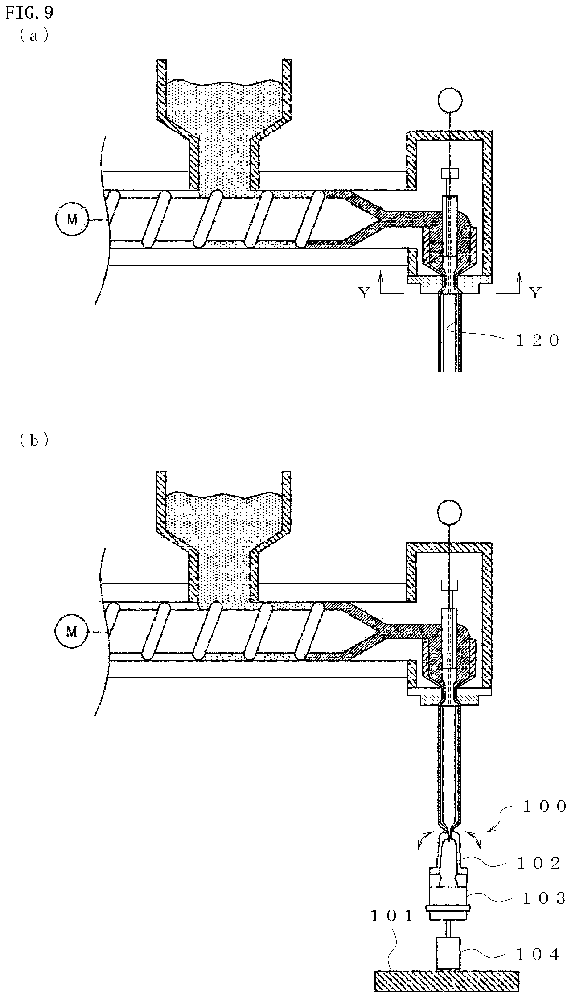

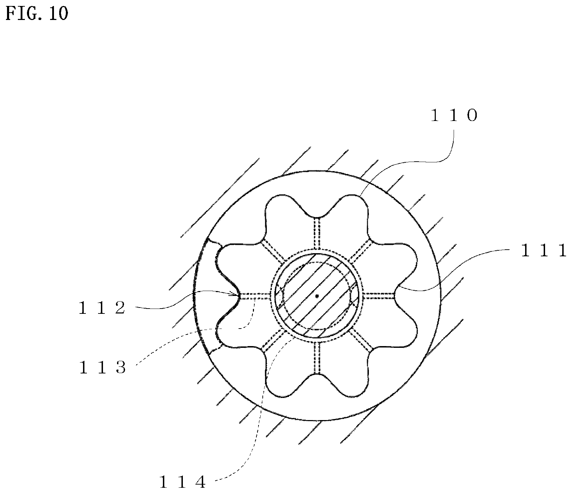

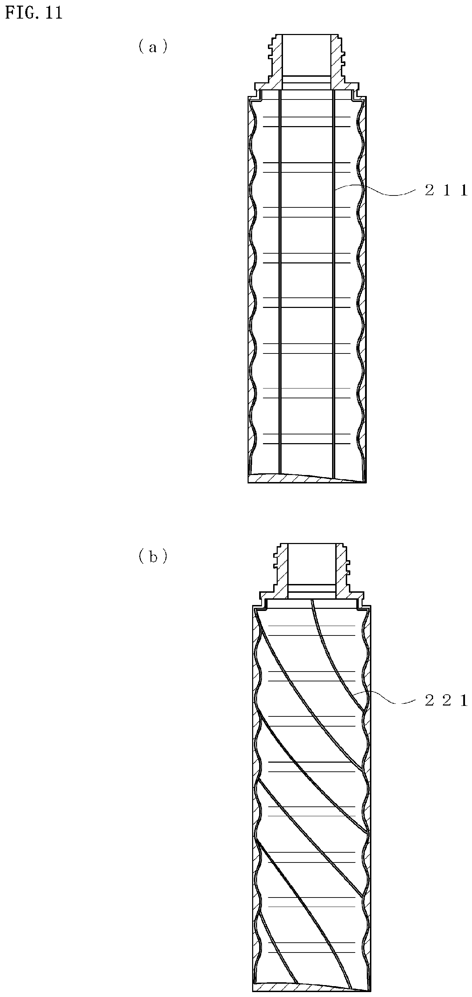

In addition to the above embodiments, the present invention may have, for example, the following configurations. FIGS. 9(a) and 9(b) are schematic views of a container manufacturing apparatus illustrating manufacturing steps of a container according to another embodiment. FIG. 10 is a cross-sectional view taken along line Y - Y FIG. 11 is a diagram illustrating a container according to another embodiment. FIG. 12 is an explanatory view for explaining movement of a core of a parison forming machine of a container manufacturing apparatus according to another embodiment.

### (1. Configuration in which projections are formed on inner surface)

The core 30 of the above embodiment has a circular bottom surface, but as illustrated in FIG. 10, a core 110 having a gear-shaped bottom surface may be adopted to obtain a container in which projections are formed on the inner surface.

In the core 110, a plurality of concave grooves 111 are arranged to be equally spaced apart from each other in the peripheral direction of the mandrel 18. The plurality of concave grooves 111 have the same shape. Each of the concave grooves 111 is opened toward both sides of the flow direction of the resin 3 in the annular passage 19. The concave groove 111 defines a part of the outlet of the annular passage 19.

Furthermore, the core is formed with a plurality of blowout ports 112 through which the pressurized cooling gas is blown out, an air path 113 extending from each of the concave grooves 111 toward the center, and an annular air path 114 at the center.

According to the parison forming machine 5 of the present embodiment, the tube-shaped parison 4 having projections 120 on the inner periphery can be formed by extruding the thermoplastic resin in a molten state through the annular passage 19 of the die head main body 8 having the mandrel 18 with the concave groove 111. At the time of forming the parison 4, a gas flow can be blown into the parison 4 from the ventilation path of the mandrel 18 through the concave groove 111.

Therefore, since the gas flow can be caused to flow so as to intensively lie along the projections 120 (see FIG. 9(a)) on the inner periphery of the parison 4 through the concave groove 111, the projections 120 of the parison 4 can be intensively cooled, and the shape of the projections 120 of the parison 4 can be maintained so as not to be lost. For example, when the parison 4 formed as described above is expanded to be formed into a container shape, it is possible to suppress the projections 120 from losing shape, and as a result, projections 211 with satisfactory shape accuracy can be formed on the inner periphery of the container (FIG. 11(a)). In addition, since a thin gas layer is formed between the surface of the projection 120 passing through the concave groove 111 and the inner surface of the concave groove 111 by the gas flow, the thermoplastic resin easily flows in the concave groove 111.

By using this manufacturing apparatus, when the resin is extruded to form the parison 4, the pressurized cooling gas flows from the blowout port 112 (see FIG. 10) of the mandrel 18 so as to lie along the projection 120 on the inner periphery of the parison 4. This is the cooling step of cooling the projections 120 on the inner surface of the parison. As a result, the projections 120 of the parison 4 can be intensively cooled, and the shape of the projections 120 of the parison 4 can be maintained so as not to be lost.

Therefore, for example, when the parison 4 formed as described above is expanded to be formed into a container shape, it is possible to suppress the shape of the projection 120 from being lost, and as a result, the projections 211 with satisfactory shape accuracy can be formed on the inner peripheral surface of the body portion of the container illustrated in FIG. 11(a).

In addition, since a thin gas layer is formed between the surface of the projection 120 passing through the concave groove 111 and the inner surface of the concave groove 111 by the pressurized cooling gas from the ventilation path 22, the thermoplastic resin 3 easily flows in the concave groove 111. As a result, the shape accuracy of a spiral strip 221 of the container 2 can be further enhanced.

Furthermore, the blowout port 112 of the ventilation path 22 is disposed at the bottom of the most upstream side end portion of the concave groove 111. Thus, the pressurized cooling gas can start to cool immediately after forming the projections 120 of the parison 4.

Since the blowout port 112 of the ventilation path 22 is formed in a concave groove forming member serving as a member forming the concave groove 111, the blowout port 112 and the concave groove 111 are accurately positioned with respect to each other. As a result, the pressurized cooling gas from the ventilation path 22 can be caused to reliably lie along the concave groove 111. As a result, the shape accuracy of a projection 211 of the container can be further enhanced.

The container formed by the manufacturing apparatus in which the configuration of the core is changed is a container in which the bulged portion is continued in the height direction on the inner surface and the projection extending in the height direction is provided on the inner surface.

### (2. Manufacturing apparatus equipped with spiral strip forming machine)

As illustrated in FIG. 9(b), a configuration can be adopted in which a twisting mechanism configured to twist the parison is added to the manufacturing apparatus of the above-described embodiment in order to form a spiral strip or the like on the inner surface.

As illustrated in FIG. 9(b), a twisting mechanism 100 includes a pair of arms 102 serving as clamping portions, an open/close mechanism 103, and a rotation motor 104 serving as a rotating portion.

The pair of arms 102 is for gripping the parison 4. As an example, the material of the arm is aluminum, and the outer surface of the arm 102 is coated with Teflon (registered trademark).

A lower end portion of each arm 102 is connected to the open/close mechanism 103. When the open/close mechanism 103 is driven, the upper end portions of the pair of arms 102 come close to and away from each other, so that the opening/closing operation of the pair of arms 102 is performed. Each arm 102 has a shape in which an upper end portion thereof is bent to the inner side. In addition, the arm 102 has a wide shape, and by having such a shape, the arm 102 can easily grip the parison 4.

Then, the arm 102 of the twisting mechanism 100 grips the lower side portion of the parison 4 that has been extruded and hanged down, and the lower side portion of the outer peripheral surface of the parison 4 is crushed by the force of the arm 102. In this manner, by crushing the lower side portion of the outer peripheral surface of the parison 4, the pair of arms 102 can firmly grip the parison 4.

Then, in a state where the lower side portion of the parison 4 is gripped by the pair of arms 102, the rotation motor 104 is driven at a predetermined rotation speed by a predetermined rotation angle. Through the driving of the rotation motor 104, the pair of arms 102 rotates around the rotation axis of the rotation motor 104, and the parison 4 is twisted in the peripheral direction. For example, if there is a projection 120 extending in the height direction on the inner surface of the parison 4, the linear projection becomes a spiral-shaped projection.

Thereafter, the parison is sandwiched with a container mold, and the parison is expanded from the inner side with pressurized air and cooled, whereby a container having a spiral-shaped projection can be obtained.

According to the manufacturing apparatus in which the twisting mechanism 100 is added, it is possible to manufacture a container in which the bulged convex portion and the concave portion are continued in the height direction on the inner surface and the spiral-shaped projections 221 are provided on the inner surface (FIG. 11(b)).

### (3. Manufacturing apparatus in which die and core are relatively movable in horizontal direction)

In addition, as illustrated in FIG. 12, it is also possible to provide a manufacturing apparatus including a mechanism for adjusting the thickness in the peripheral direction by configuring the die 20 and the core 30 to be movable in the horizontal direction. In this case, other than having only the core 30 to be configured to be horizontally movable, the die 20 and a rod 50 portion including the die 20 may be configured to be horizontally movable, or the entire mandrel 18 including the core 30 may be configured to be horizontally movable. That is, the die 20 and the core 30 may be relatively horizontally movable. As a horizontally movable configuration, a servomotor or the like may be connected to control the movement.

As a result, since the core 30 can be configured to be movable in the up-down direction and the horizontal direction with respect to the die 20, the thickness of the parison to be extruded can be adjusted to obtain a container in which the bulged convex portion and the concave portion are continued in the height direction on the inner surface and one part in the peripheral direction has a thin thickness. In addition, it is also possible to adopt a shape in which the convex portion and the concave portion are continuous in the height direction on the inner surface, and one part in the height direction and the peripheral direction has a thinner thickness portion than the other part, where by adopting such a container, a container in which the liquid inside can be pushed out by pressing the thin thickness portion with fingers or the like is obtained.

### (4. Others)

As described above, the present invention can take the above-described embodiments, but the present invention is not limited to the above-described embodiments, and various modifications can be made without deviating from the scope of the present invention, and equivalents and the like can be used instead of elements of the embodiments. In addition, many modifications may be made to adapt a specific situation or material to the teachings of the invention without deviating from the basic scope thereof.

For example, although the core 30 is configured to move up and down in the above-described embodiment, it is also conceivable to configure the die 20 to move up and down, in which case, the same effect can be obtained by moving the die 20 up and down when extruding the parison. In this case, for example, it is conceivable to configure the die 20 to be movable up and down by making the rod 50 extendable/contractible. Therefore, the present invention is not limited to the above-described embodiments, and encompasses all embodiments falling within the scope of Claims.

### Brief Description of Drawings

FIG. 1 is a schematic view of a container manufacturing apparatus illustrating manufacturing steps of a container according to an embodiment of the present invention.
FIG. 2 is a cross-sectional view of a parison forming machine of the container manufacturing apparatus.
FIG. 3 is a cross-sectional view of a main part of the parison forming machine.
FIG. 4 is a cross-sectional view taken along line X-X in FIG. 1.
FIG. 5 is an explanatory view for explaining the movement of the core of the parison forming machine.
FIG. 6 is a control diagram for controlling the core of the parison forming machine.
FIG. 7 is a diagram illustrating a container according to a first embodiment of the present invention.
FIG. 8 is a view illustrating a modified example of the container.
FIGS. 9(a) and 9(b) are schematic views of a container manufacturing apparatus illustrating manufacturing steps of a container according to another embodiment.
FIG. 10 is a cross-sectional view taken along line Y-Y of a parison forming machine of a container manufacturing apparatus according to another embodiment.
FIG. 11 is a diagram illustrating a container according to another embodiment.
FIG. 12 is an explanatory view for explaining movement of a core of a parison forming machine of a container manufacturing apparatus according to another embodiment.

### Reference Signs List

- 1: direct blow molding apparatus
- 2: container
- 3: resin
- 4: parison
- 5: parison forming machine
- 6: container forming machine
- 7: resin material supply unit
- 8: die head main body
- 11: resin material introducing port
- 12: heating cylinder
- 13: extrusion screw
- 14: electric motor
- 15: core shaft
- 16: servomotor
- 17: gas supply source
- 18: mandrel
- 19: annular passage
- 20: die
- 22: ventilation path
- 25: container mold
- 26: blow pin
- 27: driving device
- 28: gas supply source
- 29: separation mold
- 30: core
- 32: ventilation port
- 33: nozzle opening
- 34: ventilation path
- 60: base
- 100: twisting mechanism
- 101: base
- 102: arm
- 103: open/close mechanism
- 104: rotation motor
- 110: core
- 111: concave groove
- 112: blowout port
- 113: air path
- 114: annular air passage
- 120: projection
- 201: convex portion
- 202: concave portion
- 211: projection
- 221: spiral strip

## Claims

1. A container manufacturing method comprising:
step A of forming a tube-shaped parison;
step B of sandwiching the parison with a mold; and
step C of expanding the parison from an inner side to form a container;
wherein
in the step A, when a resin forming the parison is extruded from a die, a core or the die moves up and down to continuously extrude parisons having different thicknesses, and
unevenness is formed on an inner surface of the formed container.

2. The container manufacturing method according to claim 1, wherein in the step A, the core or the die is moved up and down at a predetermined interval and with a predetermined amplitude.

3. The container manufacturing method according to claim 2, wherein in the step A, the core or the die is moved up and down so that continuous unevenness is formed over an entire length in a height direction of the inner surface of the container.

4. The container manufacturing method according to claim 2, wherein in the step A, the core or the die is moved up and down so that continuous unevenness is formed over one part in a height direction of the inner surface of the container, and neither the core nor the die is moved up and down so that unevenness is not formed at other parts.

5. The container manufacturing method according to claim 1, wherein the formed container is formed with different thicknesses in a height direction.

6. The container manufacturing method according to any one of claims 1 to 5, wherein the step A includes clamping a lower end of the parison extruded from the die and hanging down, and twisting the parison in a peripheral direction while clamping the lower end of the parison.

7. The container manufacturing method according to any one of claims 1 to 5, wherein the step A includes forming a tube-shaped parison having a projection on an inner surface.

8. The container manufacturing method according to any one of claims 1 to 5, wherein in the step A, the core is disposed so as to be at a position eccentric from a center position of a central hole provided in the die, the parison is extruded so that a thickness of the parison extruded from the die has a peripheral wall of one part formed to be thinner than a peripheral wall of an other part, and the formed container is formed to have different thicknesses in a peripheral direction.

9. A container manufacturing apparatus comprising:
a means A configured to form a tube-shaped parison;
a means B configured to sandwich the parison with a mold; and
a means C configured to expand the parison from an inner side to form a container; wherein
the means A is a means that, when a resin forming the parison is extruded from a die, moves a core or the die up and down to continuously extrude parisons having different thicknesses, and
unevenness is formed on an inner surface of the formed container.

10. The container manufacturing apparatus according to claim 9, wherein the means A has a means configured to move the core or the die up and down at a predetermined interval and with a predetermined amplitude.

11. The container manufacturing apparatus according to claim 10, wherein the means A has a means configured to move the core or the die up and down so that unevenness is formed over an entire length in a height direction of the inner surface of the container.

12. The container manufacturing apparatus according to claim 10, wherein the means A has a means configured to move the core or the die up and down so that unevenness is formed over one part in a height direction of the inner surface of the container, and to move neither the core nor the die so that unevenness is not formed at other parts.

13. The container manufacturing apparatus according to claim 9, wherein the formed container is formed with different thicknesses in a height direction.

14. The container manufacturing apparatus according to any one of claims 9 to 13, wherein the means A has a means configured to clamp a lower end of the parison extruded from the die and hanging down, and twist the parison in a peripheral direction while clamping the lower end of the parison.

15. The container manufacturing apparatus according to any one of claims 9 to 13, wherein the means A has as means configured to form a tube-shaped parison having a projection on an inner surface.

16. The container manufacturing apparatus according to any one of claims 9 to 13, wherein
in the means A, the core is disposed so as to be at a position eccentric from a center position of a central hole provided in the die, and a means configured to extrude the parison so that a thickness of the parison extruded from the die has a peripheral wall of one part formed to be thinner than a peripheral wall of an other part is provided, and
the formed container is formed to have different thicknesses in a peripheral direction.

17. A container in which an outer surface is formed flat, and continuous unevenness is formed in a height direction of an inner surface.

18. The container according to claim 17, wherein the continuous unevenness is formed over an entire length in the height direction of the inner surface.

19. The container according to claim 17, wherein unevenness is formed over one part of the inner surface in the height direction, and unevenness is not formed on other parts.

20. The container according to claim 17, being formed with different thicknesses in a height direction.

21. The container according to any one of claims 17 to 20, wherein a projection is formed over the height direction on the inner surface.

22. The container according to claim 21, wherein the projection is formed in a spiral shape.

23. The container according to any one of claims 17 to 20, being formed with different thicknesses in a peripheral direction.
